# EUROPÄISCHE PATENTSCHRIFT

(11) **EP 2 407 327 B1**
(45) Veröffentlichungstag und Bekanntmachung des Hinweises auf die Patenterteilung: **25.12.2013**
(21) Anmeldenummer: 10007394.9
(22) Anmeldetag: 16.07.2010
(51) Int. Cl.: B60H 1/22

(54) **Elektrische Heizvorrichtung, insbesondere Kfz-Zusatzheizung sowie Kfz-Klimagerät**
Electric heating device, in particular additional motor vehicle heating and motor vehicle air conditioning device
Dispositif de chauffage électrique, notamment chauffage auxiliaire de véhicule automobile et climatisation de véhicule automobile

(43) Veröffentlichungstag der Anmeldung: 18.01.2012
(73) Patentinhaber: Eberspächer catem GmbH & Co. KG, 76863 Herxheim (DE)
(72) Erfinder: Clade, Michael, 67245 Lambsheim (DE); Bohlender, Franz, 76870 Kandel (DE)
(74) Vertreter: Grünecker, Kinkeldey, Stockmair & Schwanhäusser

(56) Entgegenhaltungen:
- EP-A1- 0 350 528
- DE-A1- 3 331 890
- DE-A1-102005 029 774
- DE-A1-102007 008 884
- FR-A1- 2 826 912
- FR-A1- 2 849 806
- BURK R ET AL: "INTEGRALES KLIMASYSTEM FUER ELEKTROAUTOMOBILE" ATZ AUTOMOBILTECHNISCHE ZEITSCHRIFT, VIEWEG PUBLISHING, WIESBADEN, DE, Bd. 94, Nr. 11, 1. November 1992 (1992-11-01), Seiten 582-588, XP000321845 ISSN: 0001-2785

## Beschreibung

Die vorliegende Erfindung betrifft eine elektrische Heizvorrichtung, insbesondere eine elektrische Heizvorrichtung als Zuheizer für ein Kraftfahrzeug und geht von einer elektrischen Heizvorrichtung aus, die ein Gehäuse umfasst, welches gegenüberliegende Luftdurchtrittsflächen ausbildet, an denen jeweils zumindest eine Luftdurchtrittsöffnung ausgespart ist. Das Gehäuse nimmt in sich einen Heizblock auf. Dieser Heizblock umfasst wenigstens ein PTC-Heizelement und wenigstens ein daran anliegendes Radiatorelement.

Eine gattungsgemäße elektrische Heizvorrichtung ist beispielsweise aus der EP 0 350 528 bekannt. Bei diesem Stand der Technik bestehen die PTC-Heizelemente aus einem, vorzugsweise mehreren in einer Ebene vorgesehenen PTC-Elementen, an deren gegenüberliegenden Seitenflächen Blechbänder anliegen, von denen einige seitlich über den Heizblock hinaus verlängert sind, um elektrische Anschlusselemente auszubilden. Diese elektrischen Anschlusselemente sind üblicherweise an der Außenseite des Gehäuses freiliegend. Als Radiatorelemente kommen regelmäßig mäandrierend gebogene Blechstreifen zur Anwendung.

Solche elektrischen Heizvorrichtungen werden heutzutage üblicherweise in Klimageräte eingesetzt. Diese Klimageräte haben ein Klimagehäuse, welches einen Wärmetauscher umschließt, der an einen Kühlwasserkreislauf eines Kraftfahrzeuges anschließbar ist. Das Klimagehäuse nimmt ferner die Kfz-Zusatzheizung in sich auf, um im Bedarfsfalle, üblicherweise bei relativ kaltem Verbrennungsmotor durch das Klimagehäuse strömende Luft zu erwärmen. Hierzu hat das Klimagehäuse eine an der Außenseite des Klimagehäuses vorgesehene Einbringöffnung für die Kfz-Zusatzheizung. Dieser Einbringöffnung gegenüberliegend liegt eine durch das Klimagehäuse ausgebildete Begrenzungswand, welche üblicherweise Befestigungsöffnungen ausbildet, die Befestigungszapfen in sich aufnimmt, welche an derjenigen Außenfläche des Gehäuses der Kfz-Zusatzheizung diese Außenfläche überragend vorgesehen sind, die im Einbauzustand der Kfz-Heizung benachbart zu der Begrenzungswand vorgesehen sind.

Ein Klimagehäuse ist allgemein in der DE 33 31 890 C2 beschrieben. Ein entsprechendes Gehäuse mit Kfz-Zusatzheizung offenbart der Beitrag "Integrales Klimasystem für Elektroautomobile", ATZ - Automobiltechnische Zeitschrift, 11/1992 von Burk, Krauss, Dr. Löhle.

Der vorliegenden Erfindung liegt das Problem zugrunde, die wirtschaftliche Herstellung von elektrischen Heizvorrichtungen und deren Einbau in Klimagehäuse zu verbessern. Im Hinblick darauf wird mit der vorliegenden Erfindung eine elektrische Heizvorrichtung mit den Merkmalen von Anspruch 1 vorgeschlagen. Diese unterscheidet sich von dem vorbekannten Stand der Technik durch ein Strömungswiderstandselement, welches an der Außenseite des Gehäuses vorgesehen, als von dem Gehäuse unabhängiges Bauteil hergestellt und mit diesem verbunden ist. Ein Strömungswiderstandselement befindet sich dabei vornehmlich in Verlängerung der Luftdurchtrittsflächen, so dass durch das Strömungswiderstandselement die den Strömungswiderstand auf Höhe der elektrischen Heizvorrichtung ein einem Klimagehäuse bewirkende Oberfläche vergrößert wird. Die vorliegende Erfindung lässt sich dabei von der Erkenntnis leiten, dass ein die Luftströmung zu der elektrischen Heizvorrichtung leitender Strömungskanal auf Höhe der elektrischen Heizvorrichtung größer als die Abmessung des Gehäuses der elektrischen Heizvorrichtung ist. Während bisher das den Heizblock fassende und haltende Gehäuse jeweils insbesondere bei der Herstellung von Kraftfahrzeugen an die Abmessung des Klimagehäuses angepasst wurde, will die vorliegende Erfindung die Möglichkeit schaffen, bereits vorhandene elektrische Heizvorrichtungen mit vorgegebener Außenabmessung des Gehäuses in hierzu nicht passende Strömungskanäle einzubauen, ohne auf die für das Erwärmen des Mediums (Luft) vorteilhaften Strömungsbedingungen verzichten zu müssen. Dazu überragt das Strömungswiderstandselement das Gehäuse außenseitig.

So überbrückt das Strömungswiderstandselement einen verbleibenden Spalt zwischen der Außenabmessung des Gehäuses der elektrischen Heizvorrichtung und der bzw. den Innenwandungen des Strömungskanals auf Höhe der elektrischen Heizvorrichtung nach Einbau.

Das Strömungswiderstandselement der erfindungsgemäßen elektrischen Heizvorrichtung ist als separates Bauteil hergestellt und mit dem Gehäuse der elektrischen Heizvorrichtung verbunden. Die Verbindung kann durch Verclipsen, Verschweißen, Verkleben oder dergleichen erfolgen. Jedenfalls wird mit der Erfindung eine Lösung vorgeschlagen, bei welcher das Gehäuse und das wenigstens eine Strömungswiderstandselement zunächst vormontiert und danach in die Einbringöffnung eingebracht werden. Insofern kann bei der Montage ein einheitliches Bauteil bestehend aus dem Gehäuse und dem wenigstens einen Strömungswiderstandselement in die Einbringöffnung eingeschoben werden. Danach sind in dem Strömungskanal auf Höhe der elektrischen Heizvorrichtung die gewünschten Strömungsbedingungen eingestellt.

Diese Strömungsbedingungen können durch spezielle Ausgestaltung des Strömungswiderstandselementes angepasst werden. So kann das Strömungswiderstandselement eine Ausgestaltung aufweisen, durch welche ein besonderer Strömungswiderstand bei den gegebenen Strömungsbedingungen in dem Strömungsgehäuse bewirkt wird, der aus Berechnungen zur optimalen Wärmeübertragung zwischen dem strömenden Medium und dem bzw. den Radiatorelementen folgt. Die konkrete Ausgestaltung des Strömungswiderstandselementes kann dabei auch variierenden Druckdifferenzen Rechnung tragen, die sich aufgrund der Variantenvielfalt ergeben. Dabei kann das bzw. die Strömungswiderstandselemente selbst Luftaustrittsöffnungen bzw. Luftleitelemente aufweisen, die zu einer vorbestimmten Beeinflussung der Strömung in dem Strömungskanal führen, oder den lichten Abstand zwischen dem Gehäuse und den Wandungen des Klimagerätes vollständig verschieben.

Gemäß der vorliegenden Erfindung ist das Strömungswiderstandselement rahmenförmig ausgebildet und weist eine das Gehäuse aufnehmende Aufnahme auf. Das Strömungswiderstandselement umgibt danach als einheitliches, jedoch separat von dem Gehäuse der elektrischen Heizvorrichtung ausgebildetes Bauteil dieses Gehäuse jedenfalls an drei sich rechtwinklig zu den Luftdurchtrittsflächen erstreckenden Randflächen des Gehäuses. Die Aufnahme ist dabei vorzugsweise so ausgebildet, dass das Gehäuse lediglich mit geringem Spiel in der Aufnahme gehalten ist.

Die Aufnahme bildet eine Schiebeführung für das Gehäuse aus. Dies bedeutet, dass die Aufnahme üblicherweise außenseitig die Luftdurchtrittsflächen überragende Haltelaschen aufweist, welche die Beweglichkeit des Gehäuses rechtwinklig zu den Luftdurchtrittsflächen begrenzt. Das Gehäuse ist damit in dieser Richtung mit wenig Spiel innerhalb der Aufnahme gehalten. Die Schiebeführung hat dabei vorzugsweise eine Erstreckung, die der Einschieberichtung der elektrischen Heizvorrichtung in die Einbringöffnung des Klimagehäuses entspricht.

Mit Rücksicht auf eine besonders einfache Herstellung des Strömungswiderstandselementes im Wege des Spritzgießens wird gemäß einer bevorzugten Weiterbildung der vorliegenden Erfindung vorgeschlagen, die Führung mit einander gegenüberliegenden und das Gehäuse zwischen sich aufnehmenden Haltelaschen auszubilden, die versetzt zueinander vorgesehen sind. Die Haltelaschen können beispielsweise in Einschieberichtung versetzt zueinander vorgesehen sein. Eine versetzte Anordnung der Haltelaschen bedeutet insbesondere, dass bei einer Draufsicht auf das Strömungswiderstandselement die auf einer Seite an einer der Luftdurchtrittsflächen anliegenden Haltelaschen, die mit der anderen Luftdurchtrittsfläche des Gehäuses zusammenwirkenden Haltelaschen nicht überdeckt. Mit dieser Ausgestaltung kann beim Spritzgießen des Strömungswiderstandselementes auf bewegliche Werkzeugteile, wie bewegliche Kerne verzichtet werden. Zur Ausformung der Haltelaschen können alternierend über die Teilungsebene des Spritzgießwerkzeugs hinausragende Formnestteile vorgesehen sein. Das spritzgegossene Strömungswiderstandselement kann einteilig aus dem Formnest entformt werden.

Gemäß einer bevorzugten Weiterbildung der vorliegenden Erfindung ist die Aufnahme in Einschieberichtung in etwa mit der Erstreckung des Gehäuses in Einschieberichtung vorgesehen. Danach enden das Strömungswiderstandelement und das Gehäuse in etwa auf einer Höhe. Dies bietet die Möglichkeit das Strömungswiderstandselement zwischen einer der Einbringöffnung gegenüberliegenden Begrenzungswand des Klimagehäuses und einem gegebenenfalls mit dem Gehäuse der elektrischen Heizvorrichtung verbundenen Flansch, der auf der Außenseite des Klimagehäuses zu befestigen ist und sich quer zu den Schichten des Heizblocks erstreckt, einzuspannen. Zur sicheren Montage der elektrischen Heizvorrichtung zusammen mit dem separat hergestellten Strömungswiderstandselement muss das Gehäuse lediglich in die Aufnahme eingeschoben werden. Diese vormontierte Einheit, deren Teile jedenfalls in Einschieberichtung noch gleitverschieblich sind, ist nach Einbringen in das Klimagehäuse zwischen der Begrenzungswand und dem Flansch fest vorgegeben eingespannt. Es ergibt sich eine besonders einfache Ausgestaltung.

Wenngleich das Strömungswiderstandselement auch Luftdurchtrittsflächen des Gehäuses ganz oder teilweise verlegen kann, um den Strömungswiderstand über das Gehäuse insofern an die optimalen Wärmeübertragungsbedingungen anzupassen, ist es vorzuziehen, dass das Strömungswiderstandselement so ausgebildet ist, dass dieses jede der an dem Gehäuse vorgesehenen Luftdurchtrittsöffnungen freilässt. Die Luftdurchtrittsöffnungen des Gehäuses sind dabei an diesem üblicherweise korrespondierend vorgesehen und zwar an denjenigen Luftdurchtrittsöffnungen, die an dem Gehäuse parallel zueinander vorgesehen sind und die in etwa rechtwinklig von der zu erwärmenden Luft angeströmt werden.

Das Strömungswiderstandselement umfasst vorzugsweise einen Strömungswiderstandssteg. Dieser Strömungswiderstandssteg erstreckt sich üblicherweise parallel zu der bzw. den Luftdurchtrittsflächen. Er geht von einer eine Anlagefläche des Strömungswiderstandselementes ausbildenden Längswand ab, die sich rechtwinklig zu den Luftdurchtrittsflächen erstreckt. An diese Anlagefläche ist das Gehäuse anlegbar. Der Strömungswiderstandssteg kann dabei als Verlängerung in Einschieberichtung vorgesehen sein. Der Strömungswiderstandssteg kann sich aber auch hierzu rechtwinklig erstrecken. Als Strömungswiderstandssteg sei dabei insbesondere eine wandförmige Ausgestaltung bezeichnet, die in Dickenrichtung in etwa mittig an dem Strömungswiderstandselement ausgebildet ist, d.h. in etwa mittig zwischen den beiden Luftdurchtrittsflächen des Gehäuses. Dadurch kann Material bei der Herstellung des Strömungswiderstandselementes und auch Gewicht eingespart werden. Zur Versteifung der Strömungswiderstandselemente und zur Abstützung der elektrischen Heizvorrichtung in dem Strömungskanal ist es zu bevorzugen, den bzw. die Strömungswiderstandsstege durch sich im Wesentlichen rechtwinklig zu den Luftdurchtrittsflächen erstreckende Stützstege abzustützen. Diese Stützstege gehen üblicherweise von der Längswand des Strömungswiderstandselementes ab, die die Anlagefläche für das Gehäuse ausbildet. Die Stützstege können beispielsweise eine dreieckige Grundfläche haben, so dass der Zwickel zwischen der Längswand und dem freien Ende des Strömungswiderstandssteges von dem dreieckigen Stützsteg ausgefüllt ist.

Gemäß einer bevorzugten Weiterbildung der vorliegenden Erfindung hat der Strömungswiderstandssteg mehrere in Längsrichtung desselben hintereinander ausgesparte Stegöffnungen. Zwischen benachbarten Stegöffnungen sind üblicherweise die Stützstege angeschlossen. Durch die Stegöffnungen kann der Strömungswiderstand und das Strömungsverhalten durch das Strömungswiderstandselement beeinflusst werden.

Bevorzugte Weiterbildungen sind in den auf die elektrische Heizvorrichtung gerichteten abhängigen Ansprüchen angegeben.

Das mit der vorliegenden Erfindung vorgeschlagene Kfz-Klimagerät ist in Anspruch 12 angegeben. Dieses unterscheidet sich dadurch von dem vorbekannten Stand der Technik, dass der Strömungskanal auf Höhe der Kfz-Zusatzheizung größer ist als das Gehäuse derselben und dass auf Höhe der Kfz-Zusatzheizung zwischen dem Strömungskanal und der Kfz-Zusatzheizung wenigstens ein Strömungswiderstandselement vorgesehen ist, welches als von dem Gehäuse unabhängiges Bauteil hergestellt ist und den lichten Abstand zwischen dem Gehäuse und der bzw. den Wandungen des Klimagehäuses überbrückt.

Die vorliegende Erfindung wird nachfolgend unter Bezugnahme auf die Beschreibung näher erläutert. In dieser zeigen:
- Figur 1: eine leicht perspektivische Seitenansicht einer elektrischen Heizvorrichtung als Kfz-Zusatzheizung;
- Figur 2: das in Figur 1 gezeigte Ausführungsbeispiel einer Kfz-Zusatzheizung mit einem rahmenförmigen Strömungswiderstandselement;
- Figur 3: eine leicht perspektivische Seitenansicht des in Figur 2 gezeigten Ausführungsbeispiels mit einem weiteren, stirnseitig angeschlossenen Ausführungsbeispiels eines Strömungswiderstandselementes;
- Figur 4: eine perspektivische Seitenansicht des in Figur 3 gezeigten Ausführungsbeispiels des rahmenförmigen Strömungswiderstandselementes ohne darin eingebaute Kfz-Zuheizung; und
- Figur 5: das in Figur 4 gezeigte Ausführungsbeispiel in einer Draufsicht.

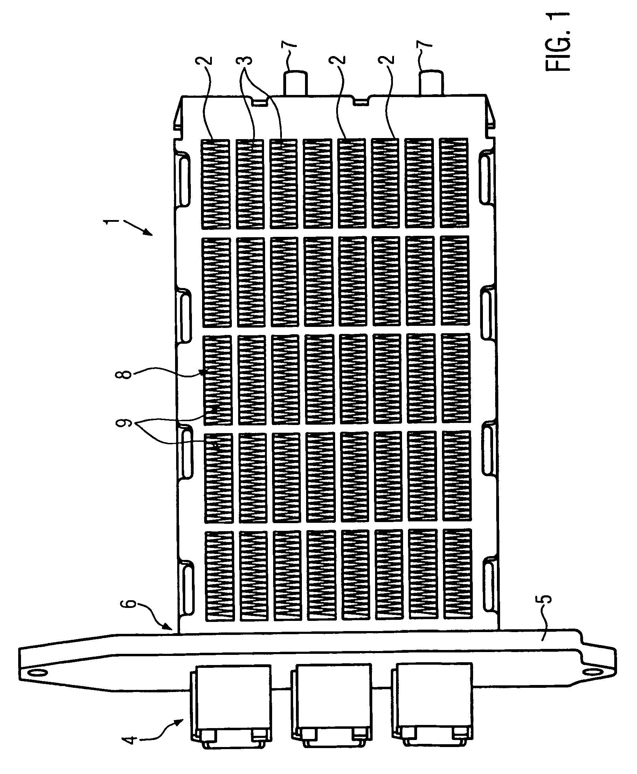

Das in Figur 1 gezeigte Ausführungsbeispiel einer Kfz-Zuheizung umfasst ein zweiteiliges Gehäuse 1 mit zwei im Wesentlichen identisch ausgebildeten Gehäusehälften, die miteinander verrastet sind. Dieses Gehäuse 1 umschließt einen Heizblock bestehend aus mehreren PTC-Heizelementen 2 und daran anliegenden Radiatorelementen 3. Dieser Heizblock ist üblicherweise unter Vorspannung einer Feder in dem Gehäuse 1 gehalten. Das Gehäuse 1 ist im Wesentlichen rahmenförmig ausgeformt und wird an einer Anschlussseite 6 von ausgewählten Blechbändern einzelner PTC-Heizelemente 2 überragt, die an dieser Außenseite elektrische Kontaktzungen ausformen. Diese werden von einem Steckergehäuse 4, umgeben, welches einteilig mit einem Flansch 5 mittels Spritzgießen ausgeformt ist. Auf Seiten des Flansches 5 bildet das Gehäuse 1 danach eine Anschlussseite 6 aus. An der der Anschlussseite 6 gegenüberliegenden Seite ist das Gehäuse 1 von Befestigungszapfen 7 überragt. Diese Befestigungszapfen 7 sind in Befestigungsöffnungen einbringbar, die an einem nicht dargestellten Klimagehäuse ausgespart sind. Nach Einbringen der Befestigungszapfen 7 in die entsprechenden Befestigungsöffnungen ist das Gehäuse 1 gegenüber dem Klimagehäuse festgelegt. Die Befestigungszapfen 7 können mittels Spritzgießen an dem Gehäuse 1 ausgeformt oder beim Verclipsen der beiden Gehäusehälften mit dem Kunststoffgehäuse 1 verrastet bzw. verbunden werden.

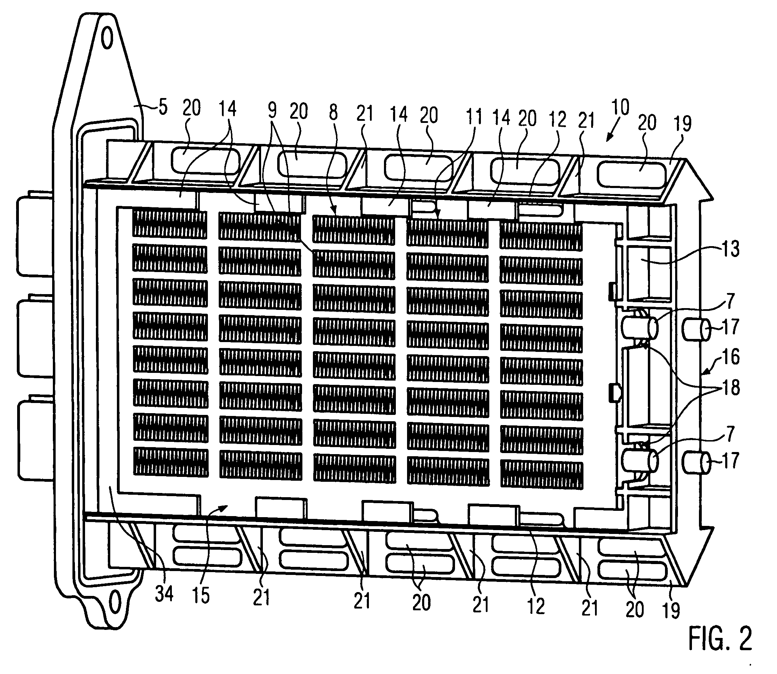

Die Figur 2 zeigt ein Ausführungsbeispiel eines rahmenförmigen Strömungswiderstandselements 10. Dieses rahmenförmige Strömungswiderstandselement 10 bildet zwei einander gegenüberliegende Rahmenöffnungen 11 aus, welche an dem Gehäuse 1 an einander gegenüberliegenden Luftdurchtrittsflächen 8 des Gehäuses 1 ausgesparte Luftdurchtrittsöffnungen 9 freilassen. Das rahmenförmige Strömungswiderstandselement 10 bildet zwei sich gegenüberliegende Längswände 12 aus sowie eine diese beiden Längswände 12 überbrückende Stirnwand 13. Die Abmessung der Längswände 12 und der Stirnwand 13 entsprechen in etwa der Dicke des Gehäuses 1. Der Abstand der Längswände 12 entspricht in etwa der Breite des Gehäuses 1. Die Längswände 12 werden auf der Innenseite von Haltelaschen 14 überragt, die den Luftdurchtrittsflächen 8 des Gehäuses 1 zugeordnet sind und die Querbeweglichkeit des Gehäuses 1 innerhalb einer Schiebeaufnahme 15 begrenzen. Der Abstand einander gegenüberliegender Haltelaschen 14 entspricht in etwa der Dicke des Gehäuses 1.

Bei dem gezeigten Ausführungsbeispiel besteht keine Verbindung zwischen dem Strömungswiderstandselement 10 und dem Flansch 5. Allerdings ist es durchaus denkbar, das Strömungswiderstandselement 10 mit dem Flansch 5 zu verrasten, so dass auf einfache Weise eine bauliche Einheit bestehend aus dem Flansch 5, dem Gehäuse 1 und dem Strömungswiderstandselement 10 gebildet ist.

Benachbart zu der Stirnwand 13 bildet das Strömungswiderstandselement 10 eine fachwerkartige Stützstruktur aus. Eine der Anschlussseite 6 gegenüberliegende Befestigungsseite 16 des Strömungswiderstandselementes 10 wird von Zapfenelementen 17 überragt, die beispielsweise mittels Spritzgießen beim Herstellen des Strömungswiderstandselementes 10 ausgebildet sind. Die Stirnwand 13 weist korrespondierend zu der Position der Zapfenelemente 7 Ausnehmungen 18 auf, die derart ausgeformt sind, dass die Befestigungszapfen 7 des Gehäuses 1 in diese Ausnehmungen 18 passen.

An ihrer der Schiebeaufnahme 15 gegenüberliegenden Außenseite sind die Längswände 12 von Strömungswiderstandsstegen 19 überragt, die in etwa in Dickenrichtung mittig an dem Strömungswiderstandselement 10 ausgebildet sind. Die Strömungswiderstandsstege 19 haben in Längsrichtung der Stege 19 hintereinander vorgesehene Stegöffnungen 20. Zwischen benachbarten Stegöffnungen 20 sind Stützstege 21 angeformt, die sich in einem Zwickel zwischen dem Strömungswiderstandssteg 19 und der Außenseite der Längswände 12 erstrecken und die Strömungswiderstandsstege 19 versteifen. Der in Figur 2 obere Strömungswiderstandssteg 19 hat eine Reihe von Stegöffnungen 20; der sich parallel dazu erstreckende untere Strömungswiderstandssteg 19 hat zwei Reihen von Stegöffnungen 20.

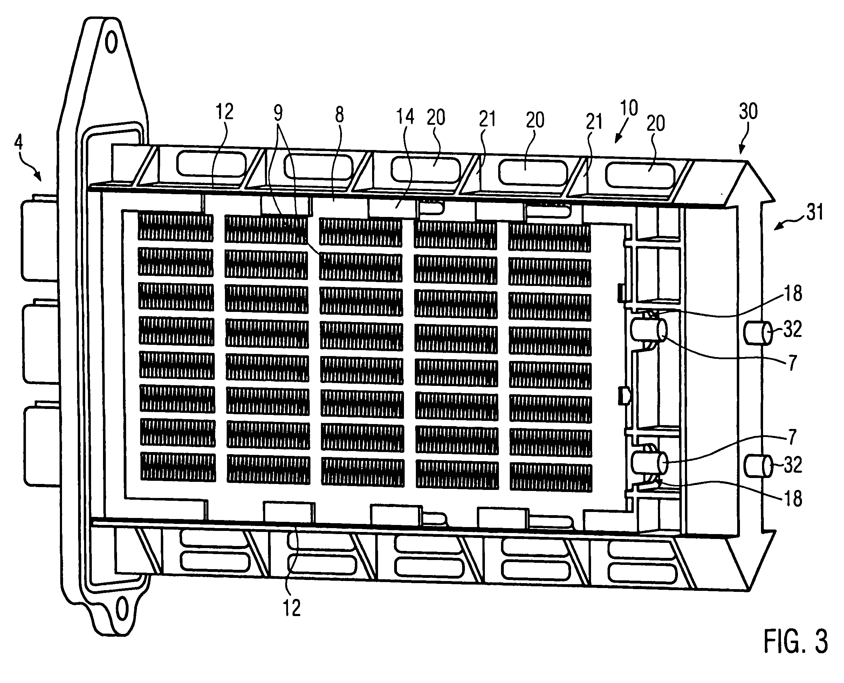

Die Figur 3 verdeutlicht ein weiteres Ausführungsbeispiel eines Strömungswiderstandselementes, welches als stirnseitiges Strömungswiderstandselement 30 ausgebildet ist. Das stirnseitige Strömungswiderstandselement 30 ist als Vollelement ausgeformt, d.h. hat keine Strömungsdurchlassöffnungen. Das stirnseitige Strömungswiderstandselement 30 hat hier nicht dargestellte Aufnahmeöffnungen, welche auf den Außendurchmesser der Zapfenelemente 17 angepasst ausgebildet sind, so dass das stirnseitige Strömungswiderstandselement 30 auf diese Zapfenelemente 17 aufgesteckt und dort fixiert ist. Das stirnseitige Strömungswiderstandselement 30 nimmt mit seinem Querschnitt die Querschnittsform an der Befestigungsseite 16 des rahmenförmigen Strömungswiderstandselementes 10 auf. An seiner Befestigungsseite 31 ist das stirnseitige Strömungswiderstandselement 30 durch zwei Zapfenelemente 32 überragt. Diese Zapfenelemente 32 passen in Befestigungsöffnungen, die in dem Klimagehäuse eines Kfz-Klimagerätes ausgespart sind und zwar auf Höhe der Einbringöffnung der Kfz-Zusatzheizung.

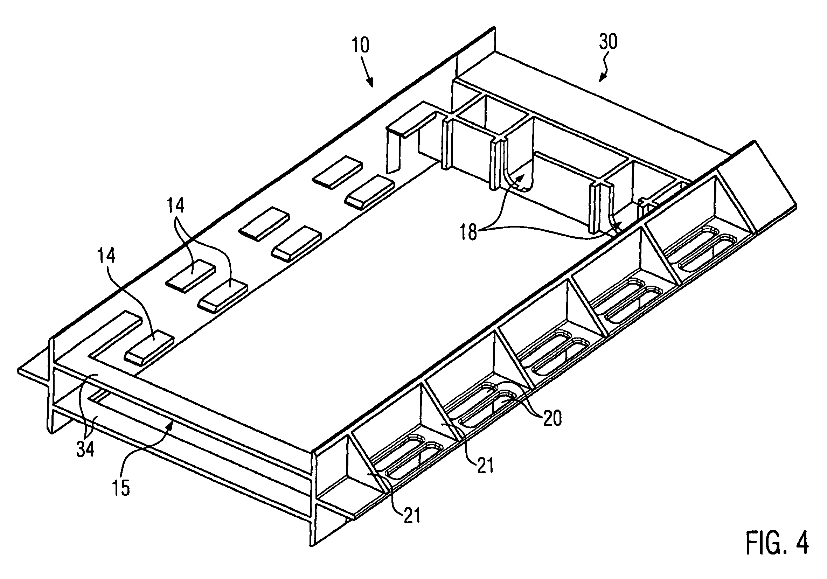

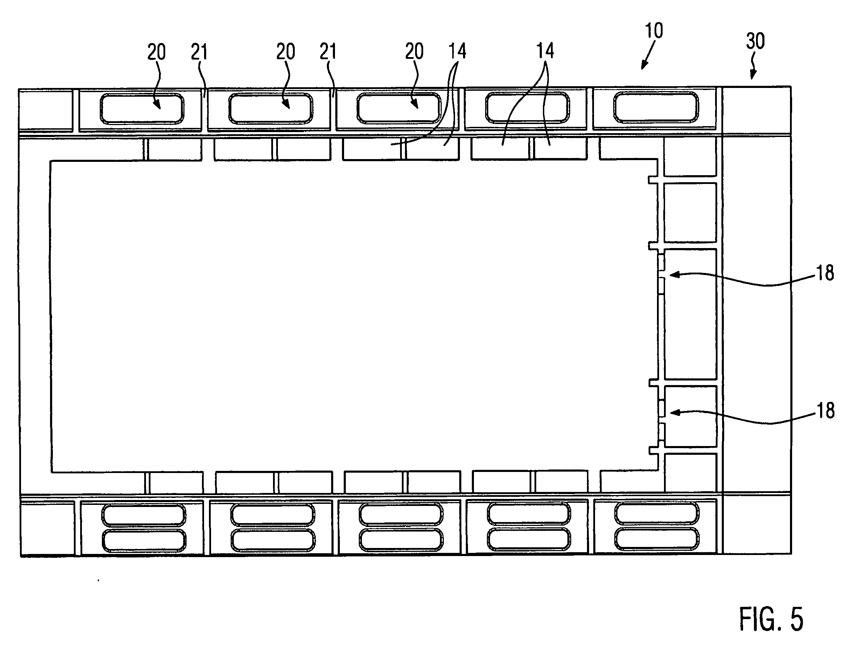

Wie insbesondere die Figuren 4 und 5 erkennen lassen, sind die Haltelaschen 14 versetzt zueinander vorgesehen. Bei Draufsicht auf das Gehäuse 1 überdecken sich die an gegenüberliegenden Rahmenöffnungen 11 vorgesehenen und zwischen sich das Gehäuse 1 eingrenzende Haltelaschen 14 danach nicht (vgl. Figur 5). Ein Einbringen der in Figur 1 gezeigten Zusatzheizung in die Schiebeaufnahme 15 erfolgt durch eine Schiebeöffnung, die durch zwei gegenüberliegende Längswände 12 des rahmenförmigen Strömungswiderstandselementes 10 überbrückende Verbindungsstege 34 miteinander verbunden sind. Die stirnseitigen Enden der Verbindungsstege 34 bilden dabei einen Anschlag für den Flansch.

Durch die Schiebeaufnahme 15 ist eine Führung zum Einschieben des Gehäuses 1 in das Strömungswiderstandselement 10 gebildet. Die Tiefe dieser Führung, d.h. der Abstand zwischen der Stirnwand 13 und dem an dem Flansch 5 anliegenden freien Ende des Strömungswiderstandselementes 10 entspricht in etwa der Abmessung des Gehäuses 1 in Längsrichtung, d.h. in Einschieberichtung.

Die in den Figuren 1 bis 5 gezeigten Ausführungsbeispiele von Strömungswiderstandselementen 10, 30 verdeutlichen, dass die in Figur 1 gezeigte Zusatzheizung in unterschiedlich große Strömungsquerschnitte in einem Klimagehäuse eingebracht werden kann, ohne dass wesentliche Anteile der zu erwärmenden Luftströmung an dem Gehäuse 1 der Zusatzheizung vorbeiströmen können. Das Ausführungsbeispiel der Figuren 2 und 3 kann in ein Klimagehäuse eingesetzt werden, welches in Einschieberichtung der Zusatzheizung und auch quer hierzu größer als das Gehäuse 1 der Zusatzheizung ist. Das stirnseitige Strömungswiderstandselement 30 überbrückt eine größere Erstreckung des Klimagehäuses in Einbringrichtung der Zusatzheizung.

### Bezugszeichenliste

- 1: Gehäuse
- 2: PTC-Heizelement
- 3: Radiatorelement
- 4: Steckergehäuse
- 5: Flansch
- 6: Anschlussseite des Gehäuses 1
- 7: Befestigungszapfen des Gehäuses 1
- 8: Luftdurchtrittsfläche
- 9: Luftaustrittsöffnung
- 10: rahmenförmiges Strömungswiderstandselement
- 11: Rahmenöffnung
- 12: Längswand
- 13: Stirnwand
- 14: Haltelasche
- 15: Schiebeaufnahme
- 16: Befestigungsseite des rahmenförmigen Strömungswiderstandselementes
- 17: Zapfenelement des rahmenförmigen Strömungswiderstandselementes
- 18: Ausnehmung
- 19: Strömungswiderstandssteg
- 20: Stegöffnung
- 21: Stützsteg
- 30: stirnseitiges Strömungswiderstandselement
- 31: Befestigungsseite des stirnseitigen Strömungswiderstandselementes
- 32: Zapfenelement des stirnseitigen Strömungswiderstandselementes
- 34: Verbindungssteg

## Patentansprüche

1. Elektrische Heizvorrichtung, insbesondere Kfz-Zusatzheizung,
mit einem geschichteten Heizblock umfassend wenigstens ein PTC-Heizelement (2) und wenigstens ein daran anliegendes Radiatorelement (3), der in einem gegenüberliegende Luftdurchtrittsflächen (8) mit darin ausgesparten Luftdurchtrittsöffnungen (9) ausbildenden Gehäuse (1) gehalten ist,
**gekennzeichnet durch**
wenigstens ein an der Außenseite des Gehäuses (1) angeordnetes rahmenförmiges Strömungswiderstandselement (10),
welches als von dem Gehäuse (1) unabhängiges Bauteil mit einer Aufnahme als Schiebeführung (15) für das Gehäuse (1) hergestellt und mit diesem verbunden ist, und
wobei das Gehäuse (1) in der Schiebeführung (15) gehalten ist.

2. Elektrische Heizvorrichtung nach Anspruch 1, **dadurch gekennzeichnet, dass** die Schiebeführung (15) einander gegenüberliegende und das Gehäuse (1) zwischen sich aufnehmende Haltelaschen (14) aufweist, die versetzt zueinander vorgesehen sind.

3. Elektrische Heizvorrichtung nach Anspruch 1 oder 2, **dadurch gekennzeichnet, dass** die Aufnahme (15) in Einschieberichtung in etwa mit der Erstreckung des Gehäuses (1) in Einschieberichtung vorgesehen ist.

4. Elektrische Heizvorrichtung nach einem der vorherigen Ansprüche, **dadurch gekennzeichnet, dass** das Strömungswiderstandselement (10) die bzw. jede an dem Gehäuse (1) vorgesehene Luftdurchtrittsöffnung (9) freilässt.

5. Elektrische Heizvorrichtung nach einem der vorherigen Ansprüche, **dadurch gekennzeichnet, dass** das Strömungswiderstandselement (10) außerhalb einer an eine sich rechtwinklig zu den Luftdurchtrittsflächen (8) erstreckenden Außenfläche des Gehäuses (1) anlegbaren Anlagefläche des Strömungswiderstandselementes (10) einen sich im Wesentlichen parallel zu den Luftdurchtrittsflächen (8) erstreckenden Strömungswiderstandssteg (19) umfasst.

6. Elektrische Heizvorrichtung nach Anspruch 5, **dadurch gekennzeichnet, dass** der Strömungswiderstandssteg (19) durch sich im Wesentlichen rechtwinklig zu den Luftdurchtrittsflächen (8) erstreckende Stützstege (21) abgestützt ist.

7. Elektrische Heizvorrichtung nach Anspruch 5 oder 6, **dadurch gekennzeichnet, dass** der Strömungswiderstandssteg (19) durch mehrere in Längsrichtung des Strömungswiderstandssteges (19) hintereinander ausgesparte Stegöffnungen (20) durchbrochen ist.

8. Elektrische Heizvorrichtung nach einem vorherigen Ansprüche, **dadurch gekennzeichnet, dass** das Gehäuse (1) einen sich quer zu den Schichten (2, 3) des Heizblocks erstreckenden Flansch (5) aufweist, der an dem Strömungswiderstandselement (10) anliegt.

9. Elektrische Heizvorrichtung nach einem der vorherigen Ansprüche, **dadurch gekennzeichnet, dass** das Gehäuse (1) eine Anschlussseite (6) ausbildet, an der elektrische Anschlusselemente des Heizblocks freiliegen, sowie eine der Anschlussseite (6) gegenüberliegende Befestigungsseite, an der an dem Gehäuse (1) angeordnete Befestigungszapfen (7) freiliegen und dass das Strömungswiderstandselement (10) Ausnehmungen (18) zur Aufnahme der Befestigungszapfen (7) aufweist und an seiner der Befestigungsseite des Gehäuses (1) zugeordneten Außenfläche von Zapfenelementen (17) überragt ist, die in an einem Klimagehäuses eines Fahrzeugs ausgesparte Befestigungsöffnungen einbringbar sind.

10. Elektrische Heizvorrichtung nach einem der vorherigen Ansprüche **gekennzeichnet durch** wenigstens ein zweites, stirnseitiges Strömungswiderstandselement (10; 30) welches an der Befestigungsseite des rahmenförmigen Strömungswiderstandselementes (10) mit derselben Breite wie das rahmenförmige Strömungswiderstandselement (10) ausgebildet ist und Aufnahmeöffnungen für die an der Außenfläche des rahmenförmigen Strömungswiderstandselementes (10) vorgesehenen Zapfenelemente (17) aufweist und von weiteren Zapfenelementen (32) überragt ist, die in an einem Klimagehäuse eines Fahrzeugs ausgesparte Befestigungsöffnungen einbringbar sind.

11. Elektrische Heizvorrichtung nach einem der vorherigen Ansprüche, **dadurch gekennzeichnet, dass** das rahmenförmige Strömungswiderstandselement (10) einteilig ausgebildet ist.

12. Kfz-Klimagerät mit einem Klimagehäuse, welches eine Kfz-Zusatzheizung gemäß einem der Ansprüche 1 bis 11 umfasst, wobei das Klimagehäuse eine Einbringöffnung für die Kfz-Zusatzheizung und eine der Einbringöffnung gegenüberliegende Begrenzungswand sowie einen zu der Kfz-Zusatzheizung führenden Strömungskanal ausbildet,
**dadurch gekennzeichnet, dass**
der Strömungskanal auf Höhe der Kfz-Zusatzheizung größer ist als das Gehäuse (1) der Kfz-Zusatzheizung und dass auf Höhe der Kfz-Zusatzheizung zwischen den Strömungskanal begrenzenden Wandungen des Klimagehäuses und der Kfz-Zusatzheizung wenigstens ein Strömungswiderstandselement (10; 30) der Kfz-Zusatzheizung vorgesehen ist, und den lichten Abstand zwischen dem Gehäuse (1) der Kfz-Zusatzheizung und der bzw. den Wandungen des Klimagehäuses überbrückt.

## Claims

1. Electrical heating device, in particular a motor-vehicle auxiliary heating device, with a layered heating block comprising at least one PTC heating element (2) and at least one radiator element (3) abutting thereto, which is held in a housing (1) forming oppositely situated air passage areas (8) with formed air passage apertures (9),
**characterised by**
at least one frame-shaped flow resistance element (10) provided on the outer side of the housing (1), which is manufactured as a component independent of the housing (1) with a receptacle formed as a sliding guide (15) for the housing (1) and which is connected thereto and wherein the housing (1) is held in the sliding guide (15).

2. Electrical heating device according to Claim 1, **characterised in that** the sliding guide (15) has oppositely situated retaining lugs (14) which accommodate the housing (1) between them and which are provided offset to one another.

3. Electrical heating device according to one of the Claims 1 to 2, **characterised in that** the receptacle (15) is provided in the insertion direction approximately with the extension of the housing (1) in the insertion direction.

4. Electrical heating device according to one of the previous claims, **characterised in that** the flow resistance element (10) leaves the or any air passage aperture (9) provided on the housing (1) free.

5. Electrical heating device according to one of the previous claims, **characterised in that** the flow resistance element (10) comprises a flow resistance ridge (19) essentially extending parallel to the air passage areas (8) outside of a contact base of the flow resistance element (10) which can abut an outer area of the housing (1) extending perpendicular to the air passage areas (8).

6. Electrical heating device according to Claim 5, **characterised in that** the flow resistance ridge (19) is supported by supporting ridges (21) extending essentially perpendicular to the air passage areas (8).

7. Electrical heating device according to Claim 5 or 6, **characterised in that** the flow resistance ridge (19) is penetrated by a plurality of ridge apertures (20) formed consecutively in the longitudinal direction of the flow resistance ridge (19).

8. Electrical heating device according to one of the previous claims, **characterised in that** the housing (1) has a flange (5) which extends transversely to the layers (2, 3) of the heating block and abuts the flow resistance element (10).

9. Electrical heating device according to one of the previous claims, **characterised in that** the housing (1) forms a connecting side (6), on which electrical connecting elements of the heating block (2, 3) are exposed, as well as a mounting side oppositely situated to the connecting side (6), on which mounting pins (7) arranged on the housing (1) are exposed and that the flow resistance element (10) has recesses (18) for accommodating the mounting pins (7) and on its outer surface, assigned to the mounting side of the housing (1), pin elements (17) protrude which can be introduced into mounting apertures on an air conditioning housing of a vehicle.

10. Electrical heating device according to one of the previous claims, **characterised by** at least two flow resistance elements (10, 30), of which one is formed as a frame-shaped flow resistance element (10) accommodating the housing (1) and the other as a face-side flow resistance element (30), which is formed on the mounting side of the frame-shaped flow resistance element (10) with the same width as the frame-shaped flow resistance element (10) and has receptacle openings for pin elements (17) provided on the outer surface of the frame-shaped flow resistance element (10) and has further pin elements (32) protruding beyond it, which can be introduced into mounting apertures formed on an air conditioning housing of a vehicle.

11. Electrical heating device according to one of the previous claims, **characterised in that** the frame-shaped flow resistance element (10) is formed in one piece.

12. Motor-vehicle air conditioning device with an air conditioning housing, which comprises an motor-vehicle auxiliary heating device according to one of the claims 1 to 11, wherein the air conditioning housing forms an insertion opening for the motor-vehicle auxiliary heating device and a boundary wall situated opposite the insertion opening as well as a flow channel leading to the motor-vehicle auxiliary heating device **characterised in that** the flow channel is larger at the level of the motor-vehicle auxiliary heating device than the housing (1) and that at the level of the motor-vehicle auxiliary heating device between the walls of the air conditioning housing bordering the flow channel and the motor-vehicle auxiliary heating device at least one flow resistance element (10, 30) of the motor-vehicle auxiliary heating device is provided and bridges the clearance distance between the housing (1) and the wall(s) of the air conditioning housing.

## Revendications

1. Dispositif de chauffage électrique, en particulier chauffage d'appoint de véhicule automobile,
avec un bloc de chauffage stratifié comprenant au moins un élément chauffant PTC (2) et au moins un élément de radiateur (3) qui est en contact avec celui-ci et est maintenu dans un boîtier (1) qui constitue une surface de passage d'air opposée (8) comportant des ouvertures de passage d'air (9),
**caractérisé par**
au moins un élément de résistance à l'écoulement en forme de cadre (10) agencé sur le côté extérieur du boîtier (1),
qui est constitué comme un composant indépendant du boîtier (1) avec un logement comme guide coulissant (15) pour le boîtier (1) et qui y est relié, et
dans lequel le boîtier (1) est maintenu dans le guide coulissant (15).

2. Dispositif de chauffage électrique selon la revendication 1, **caractérisé en ce que** le guide coulissant (15) comporte des pattes d'arrêt opposées (14) qui reçoivent entre elles le boîtier (1) et sont décalées entre elles.

3. Dispositif de chauffage électrique selon la revendication 1 ou 2, **caractérisé en ce que** le logement (15) en direction d'insertion est agencé environ selon l'extension du boîtier (1) en direction d'insertion.

4. Dispositif de chauffage électrique selon l'une des revendications précédentes, **caractérisé en ce que** l'élément de résistance à l'écoulement (10) libère l'ouverture de passage d'air (9), ou respectivement chaque ouverture de passage d'air, pourvue dans le boîtier (1).

5. Dispositif de chauffage électrique selon l'une des revendications précédentes, **caractérisé en ce que** l'élément de résistance à l'écoulement (10) comporte un voile de résistance à l'écoulement (19) qui s'étend essentiellement parallèlement aux surfaces de passage d'air (8) en dehors d'une surface de contact de l'élément de résistance à l'écoulement (10) pouvant être mise en contact avec une surface externe du boîtier (1) qui s'étend perpendiculairement aux surfaces de passage d'air (8).

6. Dispositif de chauffage électrique selon la revendication 5, **caractérisé en ce que** le voile de résistance à l'écoulement (19) est supporté par des voiles de support (21) qui s'étendent essentiellement perpendiculairement aux surfaces de passage d'air (8).

7. Dispositif de chauffage électrique selon la revendication 5 ou 6, **caractérisé en ce que** le voile de résistance à l'écoulement (19) est interrompu par plusieurs ouvertures de voile (20) aménagées l'une derrière l'autre en direction longitudinale du voile de résistance à l'écoulement (19).

8. Dispositif de chauffage électrique selon l'une des revendications précédentes, **caractérisé en ce que** le boîtier (1) comporte une bride (5) qui s'étend perpendiculairement aux couches (2, 3) du bloc de chauffage et est en contact avec l'élément de résistance à l'écoulement (10).

9. Dispositif de chauffage électrique selon l'une des revendications précédentes, **caractérisé en ce que** le boîtier (1) constitue un côté de connexion (6) où sont exposés les éléments de connexion électriques du bloc de chauffage, ainsi qu'un côté de fixation opposé au côté de connexion (6) où sont exposés des goujons de fixation (7) agencés sur le boîtier (1), et **en ce que** l'élément de résistance à l'écoulement (10) comporte des logements (18) pour recevoir les goujons de fixation (7) et dont dépassent des éléments de goujon (17) sur sa surface externe associée au côté de fixation du boîtier (1), qui peuvent être introduits dans des orifices de fixation aménagés dans un boîtier de climatisation d'un véhicule.

10. Dispositif de chauffage électrique selon l'une des revendications précédentes, **caractérisé par** au moins un deuxième élément de résistance à l'écoulement frontal (10 ; 30) constitué sur le côté de fixation de l'élément de résistance à l'écoulement en forme de cadre (10) avec la même largeur que l'élément de résistance à l'écoulement en forme de cadre (10) et comportant des orifices de logement pour les éléments de goujon (17) pourvus sur la surface externe de l'élément de résistance à l'écoulement en forme de cadre (10) et dont dépassent des éléments de goujon additionnels (32) qui peuvent être introduits dans des orifices de fixation aménagés dans un boîtier de climatisation d'un véhicule.

11. Dispositif de chauffage électrique selon l'une des revendications précédentes, **caractérisé en ce que** l'élément de résistance à l'écoulement en forme de cadre (10) est constitué en une seule pièce.

12. Appareil de climatisation de véhicule avec un boîtier de climatisation qui comporte un chauffage d'appoint de véhicule automobile selon l'une des revendications 1 à 11, dans lequel le boîtier de climatisation constitue un orifice d'introduction pour le chauffage d'appoint de véhicule automobile et une cloison de délimitation opposée à l'orifice d'introduction ainsi qu'un canal d'écoulement menant au chauffage d'appoint de véhicule automobile,
**caractérisé**
**en ce que** le canal d'écoulement est plus grand que le boîtier (1) du chauffage d'appoint de véhicule automobile à hauteur du chauffage d'appoint de véhicule automobile et en ce qu'au moins un élément de résistance à l'écoulement (10 ; 30) du chauffage d'appoint de véhicule automobile est pourvu à hauteur du chauffage d'appoint de véhicule automobile, entre les parois du boîtier de climatisation délimitant le canal d'écoulement et le chauffage d'appoint de véhicule automobile, et enjambe la distance libre entre le boîtier (1) du chauffage d'appoint de véhicule automobile et les parois respectives du boîtier de climatisation.
